# EUROPEAN PATENT APPLICATION

(11) **EP 4 525 150 A1**
(43) Date of publication of application: **19.03.2025**
(21) Application number: 24180185.1
(22) Date of filing: 05.06.2024
(51) Int. Cl.: H01M 50/209, H01M 50/244, H01M 50/249, H01M 50/289, H01M 50/30, H01M 50/383, H01M 50/507

(54) **BATTERY PACK AND VEHICLE INCLUDING THE SAME**

(30) Priority: 15.09.2023 US 202363583186 P
(71) Applicant: Samsung SDI Co., Ltd., Yongin-si, Gyeonggi-do 17084 (KR)
(72) Inventor: Ahn, Byung Kook, 16678 Suwon-si, Gyeonggi-do (KR)
(74) Representative: Gulde & Partner

(57) **Abstract**

The present disclosure relates to a battery pack (1) and a vehicle including the same, which is directed to providing a battery pack (1) capable of improving energy efficiency compared to that of the same volume and weight. To this end, the present disclosure provides a battery pack (1) including a housing (100), a plurality of battery cells (200), each including a first surface (201) and a second surface (202) opposite to each other, and a vent (34) and a terminal (21) formed on the first surface (201), and disposed inside the housing (100), a guide member (300) disposed between the housing (100) and the first surface (201) and configured to guide a flow of emissions discharged from the vent (34), and a buffer member (400) disposed between the housing (100) and the first surface (201) and configured to absorb an impact applied to the terminal (21).

## Description

### BACKGROUND

### 1. Technical Field

The present disclosure relates to a battery pack and a vehicle including the same.

### 2. Description of the Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.

Secondary batteries may be used as a battery pack formed of a plurality of unit battery cells connected in series and/or in parallel to provide high energy density. The battery pack may be formed by interconnecting electrode terminals of the plurality of unit cells to meet a desired amount of power, for example, to realize a high-power secondary battery for electric vehicles.

The above-described information disclosed in the technology that forms the background of the present disclosure is provided to improve understanding of the background of the present disclosure, and thus may include information that does not constitute the related art.

### SUMMARY

An aspect of embodiments of the present disclosure is directed to providing a battery pack capable of improving energy efficiency compared to that of the same volume and weight, and a vehicle including the same.

These and other aspects and features of the present disclosure will be described in or will be apparent from the following description of some embodiments of the present disclosure.

According to one or more embodiments, a battery pack includes a housing, a plurality of battery cells, each including a first surface and a second surface opposite to each other, and a vent and a terminal formed on the first surface, and disposed inside the housing, a guide member disposed between the housing and the first surface and configured to guide a flow of emissions discharged from the vent, and a buffer member disposed between the housing and the first surface and configured to absorb an impact applied to the terminal.

The housing may include a housing body, a first cover coupled to the housing body and disposed to face the first surface, and a second cover coupled to the housing body and disposed to face the second surface.

The housing may further include a cooling channel inside the second cover and through which a refrigerant is configured to flow.

The first surface may be disposed to face downward, and the first cover may be disposed below the housing body.

The guide member may include a bus bar holder disposed between the first cover and the first surface and including a bus bar connected to the terminal, a vent bracket disposed between the first cover and the bus bar holder, a plurality of transfer holes formed to pass (e.g., extending) through the bus bar holder and the vent bracket, a first chamber disposed inside the vent bracket and connected to the transfer hole, and a second chamber disposed outside the vent bracket and configured to accommodate the buffer member.

The plurality of battery cells may be arranged in a first direction, and the first chamber and the second chamber may extend in the first direction.

The first chamber and the second chamber may be alternately arranged in a second direction crossing the first direction.

The vent bracket may include a bracket body disposed to surround the first chamber, a first extension portion extending from the bracket body and in contact with the first cover, and a second extension portion extending from the first extension portion and in contact with the housing body.

The guide member may further include a sealing member configured to seal the first chamber and the transfer hole.

The sealing member may include a first sealing member disposed between the first cover and the first extension portion, a second sealing member disposed between the bus bar holder and the bracket body, and a third sealing member disposed between the bus bar holder and the first surface.

The sealing member may further include a fourth sealing member disposed inside the second chamber.

The guide member may further include a fixing member connected to the vent bracket and configured to prevent movement of the vent bracket.

The fixing member may include a first fixing body passing through the second extension portion and inserted into the housing body, a second fixing body disposed inside the housing body and coupled to the first fixing body, and a pressing flange extending from the first fixing body and configured to press the second extension portion toward the housing body.

The guide member may further include a plurality of reinforcing members configured to reinforce rigidity of the vent bracket.

The plurality of battery cells may be arranged in a first direction, and the transfer holes and the reinforcing members may be alternately arranged in the first direction.

The reinforcing members may protrude from the bracket body, and the reinforcing members may be arranged such that a longitudinal direction thereof is parallel to a second direction crossing the first direction.

The terminal may be provided as a pair, and the buffer member may include a first pad disposed on one side of the vent bracket and facing one terminal of the pair of terminals, and a second pad disposed on the other side of the vent bracket and facing the other terminal of the pair of terminals.

The first pad and the second pad may be elastically deformable.

According to one or more embodiments, a vehicle includes a vehicle body, and a battery pack coupled to the vehicle body, wherein the battery pack includes a housing, a plurality of battery cells, each including a first surface and a second surface opposite to each other, and a vent and a terminal formed on the first surface, and disposed inside the housing, a guide member disposed between the housing and the first surface and configured to guide a flow of emissions discharged from the vent, and a buffer member disposed between the housing and the first surface and configured to absorb an impact applied to the terminal.

The battery pack may be disposed below the vehicle body, and the first surface may be disposed to face downward.

In accordance with one or more embodiments of the present disclosure, by integrating a venting path into a lower space of a battery pack, which is used for bollard performance evaluation through impact analysis, a volume ratio of a battery cell can be increased and energy efficiency can be improved.

However, the effects obtainable through the present disclosure are not limited to the above effects, and other technical effects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a battery pack according to an embodiment of the present disclosure;
FIG. 2 is a bottom perspective view schematically illustrating a configuration of the battery pack according to an embodiment of the present disclosure;
FIG. 3 is an exploded perspective view schematically illustrating a configuration of the battery pack according to an embodiment of the present disclosure;
FIG. 4 is a cross-sectional view schematically illustrating a configuration of the battery pack according to an embodiment of the present disclosure;
FIG. 5 is a perspective view schematically illustrating a configuration of a battery cell according to an embodiment of the present disclosure;
FIG. 6 is a cross-sectional view schematically illustrating a configuration of the battery cell according to an embodiment of the present disclosure;
FIG. 7 is an exploded perspective view schematically illustrating a configuration of a guide member according to an embodiment of the present disclosure;
FIG. 8 is a cross-sectional view schematically illustrating a configuration of the guide member according to an embodiment of the present disclosure;
FIGS. 9 and 10 are cross-sectional perspective views schematically illustrating a configuration of the guide member according to an embodiment of the present disclosure;
FIGS. 11 and 12 are enlarged cross-sectional views schematically illustrating a configuration of a buffer member according to an embodiment of the present disclosure;
FIG. 13 is a cross-sectional view schematically illustrating a configuration of a fourth sealing member according to an embodiment of the present disclosure; and
FIG. 14 is a view schematically illustrating a configuration of a vehicle according to an embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

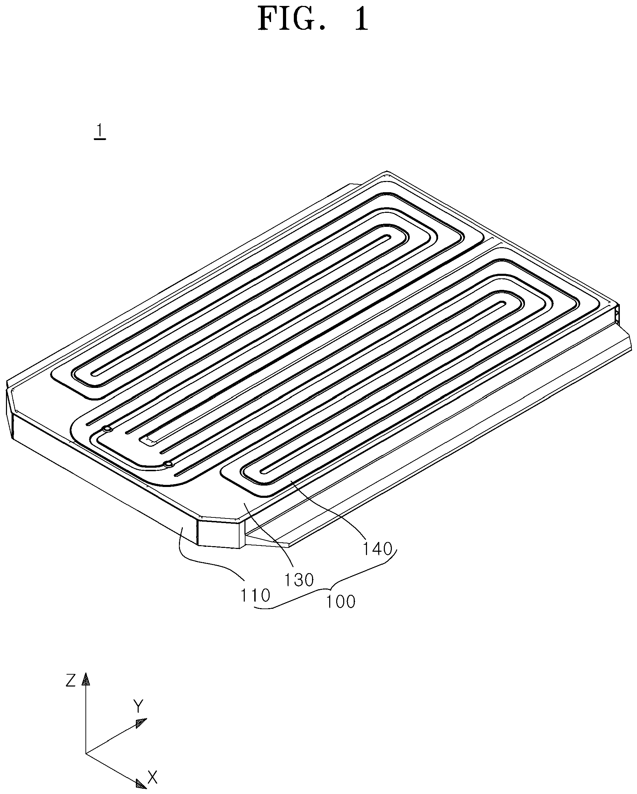

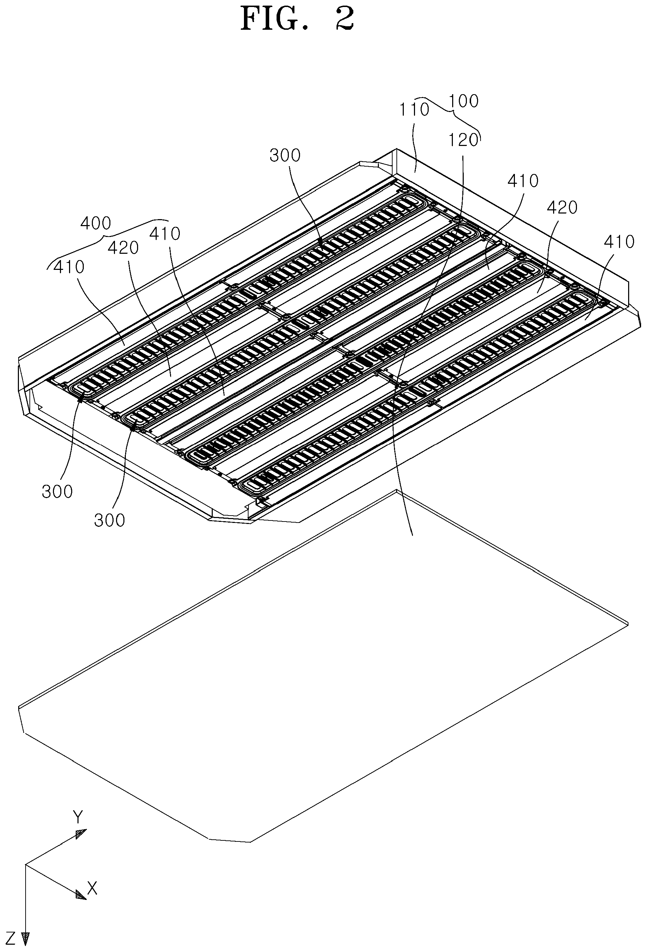

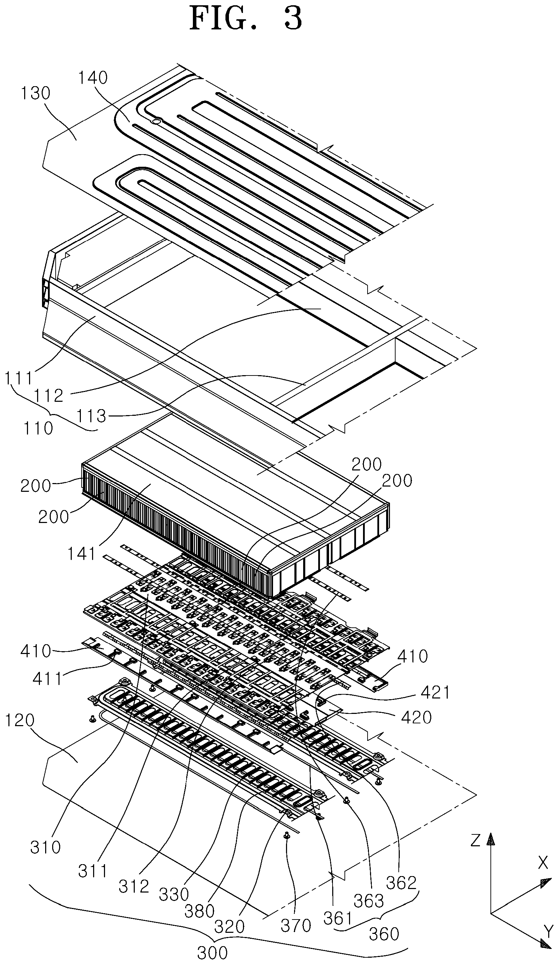

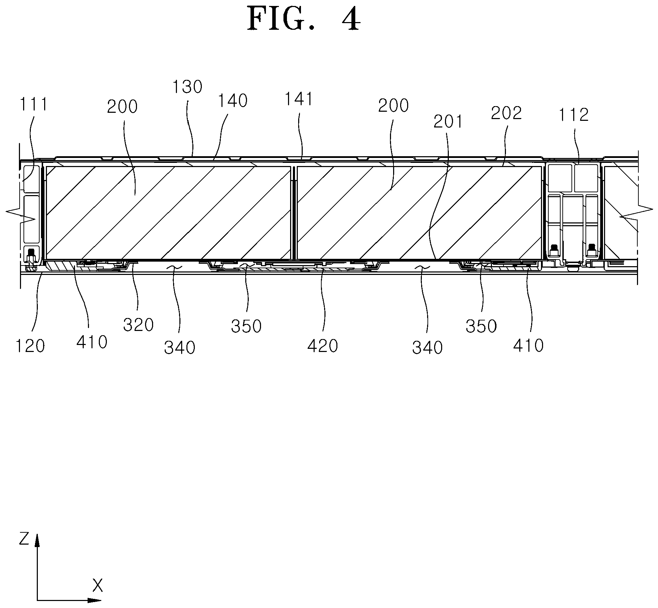

FIG. 1 is a perspective view schematically illustrating a configuration of a battery pack according to an embodiment of the present disclosure, FIG. 2 is a bottom perspective view schematically illustrating a configuration of the battery pack according to an embodiment of the present disclosure, FIG. 3 is an exploded perspective view schematically illustrating a configuration of the battery pack according to an embodiment of the present disclosure, and FIG. 4 is a cross-sectional view schematically illustrating a configuration of the battery pack according to an embodiment of the present disclosure.

A first direction described below may be illustrated as a direction parallel to a Y-axis based on FIGS. 1 to 3, and a second direction may be illustrated as a direction parallel to an X-axis.

Referring to FIGS. 1 to 4, a battery pack 1 according to the present embodiment includes a housing 100, one or more battery cells 200, a guide member 300, and a buffer member 400.

The housing 100 forms a substantial appearance of the battery pack 1, and may function as a component that supports (e.g., entirely supports) the battery cell 200, the guide member 300, and the buffer member 400, which will be described below.

The housing 100 may include a housing body 110, a first cover 120, and a second cover 130.

The housing body 110 may include a main body 111, a first partition wall 112, and a second partition wall 113.

The main body 111 may be formed to have the shape of a box of which the inside is empty and an upper side and a lower side are open. A cross-sectional shape of the main body 111 is not limited to the shape shown in FIG. 3, and may be changed in design to various shapes according to the number, arrangement form, and the like of the battery cells 200 to be described below.

The first partition wall 112 and the second partition wall 113 are disposed inside the main body 111, and may partition an inner space of the main body 111. That is, the first partition wall 112 and the second partition wall 113 may function as components that reinforce structural rigidity of the main body 111 and divide the inner space of the main body 111 in which the battery cells 200 are accommodated into a plurality of accommodation spaces. The first partition wall 112 and the second partition wall 113 may be disposed to cross each other. For example, the first partition wall 112 may be disposed such that its longitudinal direction is parallel to the first direction, and the second partition wall 113 may be disposed such that its longitudinal direction is parallel to the second direction.

One or more first partition walls 112 and one or more second partition walls 113 may be formed. In an example, as shown in FIG. 3, the first partition wall 112 may be formed as a single partition wall, and the second partition wall 113 may be formed as a plurality of partition walls. The first partition wall 112 may be disposed in a central portion of the main body 111, and the plurality of second partition walls 113 may be arranged at intervals (e.g., predetermined intervals) in a direction parallel to the first direction. FIG. 3 illustrates the case in which the first partition wall 112 is formed as a single partition wall as an example, but alternatively, a plurality of first partition walls 112 may also be formed. In this case, the plurality of first partition walls 112 may be arranged at intervals (e.g., predetermined intervals) in a direction parallel to the second direction. The number of first partition walls 112 and second partition walls 113 may be variously changed in design according to the size of the main body 111, the number of battery cells 200, and the like, which will be described below.

The first cover 120 and the second cover 130 are coupled to the housing body 110, and may close an inner space of the housing body 110.

In an example, the first cover 120 may be formed to have substantially the shape of a plate, and may be disposed to face a lower side surface of the housing body 110. The first cover 120 may be fixed to the housing body 110 by various types of coupling methods such as bolting, welding, and fitting.

The second cover 130 may be formed to have substantially the shape of a plate, and disposed to face an upper side surface of the housing body 110. The second cover 130 may be fixed to the housing body 110 by various types of coupling methods such as bolting, welding, and fitting.

The housing 100 may further include a cooling channel 140.

The cooling channel 140 may be disposed inside the second cover 130, and may provide a flow path of a refrigerant supplied from the outside. The cooling channel 140 may function as a component that cools the battery cells 200 by a heat exchange action between a refrigerant flowing therethrough and the battery cells 200, which will be described below. The cooling channel 140 may extend so as to form a zigzag shape in the second cover 130 so that a refrigerant is circulated throughout an area (e.g., the entire area) of the second cover 130. The refrigerant flowing through the cooling channel 140 may be changed in design to various types of heat exchange media such as water, insulating oil, and the like.

The battery cell 200 may function as a unit structure, which stores and supplies power, in the battery pack 1.

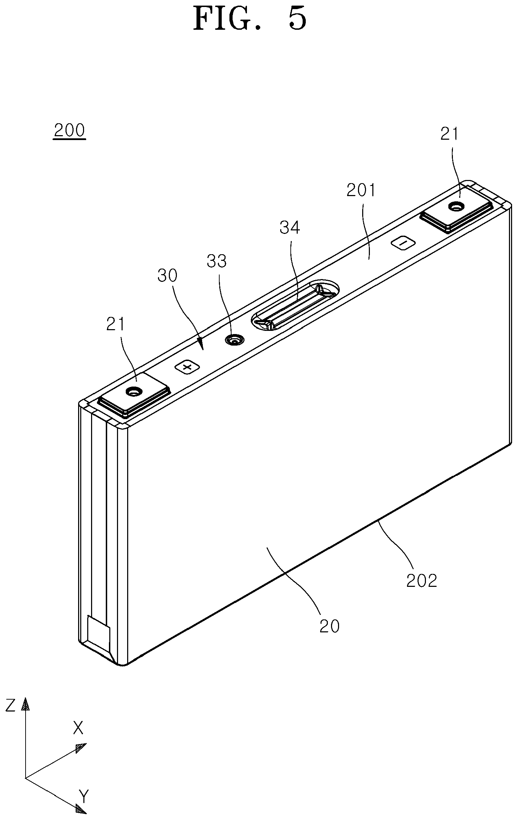

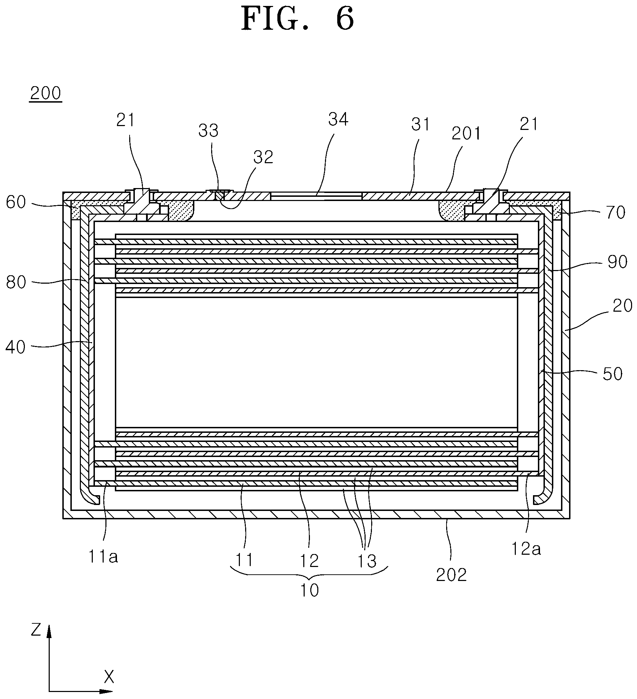

FIG. 5 is a perspective view schematically illustrating a configuration of the battery cell according to an embodiment of the present disclosure, and FIG. 6 is a cross-sectional view schematically illustrating a configuration of the battery cell according to an embodiment of the present disclosure.

Referring to FIGS. 5 and 6, the battery cell 200 may include at least one electrode assembly 10 in which a separator 13, which is an insulator, is interposed between a positive electrode 11 and a negative electrode 12, and wound together, a case 20 in which the electrode assembly 10 is embedded, and a cap assembly 30 coupled to an opening of the case 20.

Hereinafter, a case in which the battery cell 200 is a lithium ion secondary battery and has a prismatic shape will be described as an example. However, the present disclosure is not limited thereto, and the battery cell 200 may be, for example, a lithium polymer battery or a cylindrical battery.

The positive electrode 11 and the negative electrode 12 may include a coated portion, which is a region in which an active material is applied on a current collector formed of a thin metal foil, and uncoated portions 11a and 12a, which are regions to which the active material is not applied.

The positive electrode 11 and the negative electrode 12 may be wound after interposing the separator 13, which is an insulator, therebetween. However, the present disclosure is not limited thereto, and the electrode assembly 10 may have a structure in which a positive electrode and a negative electrode, each formed of a plurality of sheets, are alternately stacked, while interposing a separator therebetween.

The case 20 forms an overall appearance of the battery cell 200, and may be formed of a conductive metal, such as aluminum, an aluminum alloy, or nickel-plated steel. In addition, the case 20 may provide a space in which the electrode assembly 10 is accommodated.

The cap assembly 30 may include a cap plate 31 configured to cover the opening of the case 20, and the case 20 and the cap plate 31 may be made of a conductive material. Here, a terminal 21 electrically connected to the positive electrode 11 or the negative electrode 12 may be installed to protrude to the outside through the cap plate 31.

In addition, the terminal 21 protruding to the outside of the cap plate 31 may be formed as a pair. The pair of terminals 21 may be connected to the positive electrode 11 and the negative electrode 12 and may function as a positive electrode terminal and a negative electrode terminal of the battery cell 200, respectively. More specifically, the terminals 21 may be electrically connected to current collectors including first and second current collectors 40 and 50 (hereinafter, referred to as positive and negative electrode current collectors) that are bonded to a positive electrode uncoated portion 11a and a negative electrode uncoated portion 12a, respectively, by welding. For example, the pair of terminals 21 may be coupled to the positive and negative electrode current collectors 40 and 50, respectively, by welding. However, the present disclosure is not limited thereto, and the terminals 21 may be integrally coupled with the positive and negative electrode current collectors 40 and 50, respectively. An outer circumferential surface of an upper column of the terminal 21 may be screw-processed and may be fixed to the cap plate 31 with a nut.

However, the present disclosure is not limited thereto, and the terminal 21 may have a rivet structure and may be riveted to the cap plate 31, or welded to the cap plate 31.

The cap plate 31 may be made of a thin plate and coupled to the opening of the case 20. In the cap plate 31, an electrolyte injection hole 32 in which a sealing cap 33 may be installed may be formed, and a vent 34 may be installed.

The vent 34 may be opened and closed in conjunction with a change in internal pressure of the case 20. That is, the vent 34 may seal the case 20 by maintaining a closed state during normal operation of the electrode assembly 10. The vent 34 may be opened as the internal pressure of the case 20 is increased to a set magnitude or more due to overcharge, fire occurrence, or the like, and may discharge emissions such as flames and gases from the inside of the case 20 to the outside of the case 20.

An insulating member may be installed between the electrode assembly 10 and the cap plate 31. Here, the insulating member may include first and second lower insulating members 60 and 70, and each of the first and second lower insulating members 60 and 70 may be installed between the electrode assembly 10 and the cap plate 31.

According to the present embodiment, an end of a separation member, which may be installed to face a side surface of the electrode assembly 10, may be installed between the insulating member and the terminal 21.

The separation member may include first and second separation members 80 and 90.

Accordingly, first ends of the first and second separation members 80 and 90, each of which may be installed to face a side surface of the electrode assembly 10, may be installed between the first and second lower insulating members 60 and 70 and the pair of terminals 21, respectively.

As a result, the terminals 21 welded to the positive and negative electrode current collectors 40 and 50 may be coupled to the first and second lower insulating members 60 and 70 and first ends of first and second separation members 80 and 90, respectively.

The battery cell 200 may include a first surface 201 and a second surface 202 that are opposite to each other. Here, the first surface 201 may refer to a top surface of the cap plate 31, and the second surface 202 may refer to a bottom surface of the case 20. Accordingly, the terminal 21 and the vent 34 may be formed on the first surface 201 of the battery cell 200.

The battery cell 200 may be disposed inside the housing 100. The first surface 201 of the battery cell 200 may be disposed to face the first cover 120 in the housing 100. That is, the first surface 201 may be disposed to face downward, and the terminal 21 and the vent 34 formed on the first surface 201 may also be disposed to face downward.

The second surface 202 of the battery cell 200 may be disposed to face the second cover 130. That is, the second surface 202 may be disposed to face upward. The second surface 202 may be spaced apart from the second cover 130 by a distance (e.g., a predetermined distance).

A heat dissipation member 141 for improving heat exchange efficiency between the battery cell 200 and a refrigerant flowing through the cooling channel 140 may be installed between the second surface 202 and the second cover 130. The heat dissipation member 141 may be formed of a material having high thermal conductivity, such as a thermal glue. The heat dissipation member 141 may be applied onto the second cover 130 or the second surface 202 in a liquid or gel state, and then cured and fixed between the second surface 202 and the second cover 130. The shape of the heat dissipation member 141 is not limited to the shape shown in FIGS. 3 and 4, and may be variously changed in design according to the shape of the battery cell 200, the distance between the second surface 202 and the second cover 130, and the like.

A plurality of battery cells 200 may be provided. The plurality of battery cells 200 may be disposed inside the housing 100. The plurality of battery cells 200 may be disposed in a set number and form for each different accommodation space of the housing 100, which are divided by the main body 111, the first partition wall 112, and the second partition wall 113. The plurality of battery cells 200 may be arranged in the first direction inside the housing 100. The battery cells 200 arranged in the first direction may be disposed in a plurality of rows in the second direction. For example, twenty-four battery cells 200 may be arranged in the first direction in each accommodation space of the housing 100, and twenty-four battery cells 200 arranged in the first direction may be disposed in two rows in the second direction. However, the number and arrangement form of the plurality of battery cells 200 are not limited thereto, and may be changed in design to various numbers and arrangement forms.

The guide member 300 may be disposed between the housing 100 and the first surface 201 of the battery cell 200. The guide member 300 may function as a component that guides the flow of emissions, which are discharged from the vent 34, for example, in the event of an explosion or thermal runaway of the battery cell 200, in the housing 100. Here, the emissions may be various materials, such as gas, flames, smoke, and other scattering materials, discharged from the vent 34 in the event of an explosion or thermal runaway of the battery cell 200.

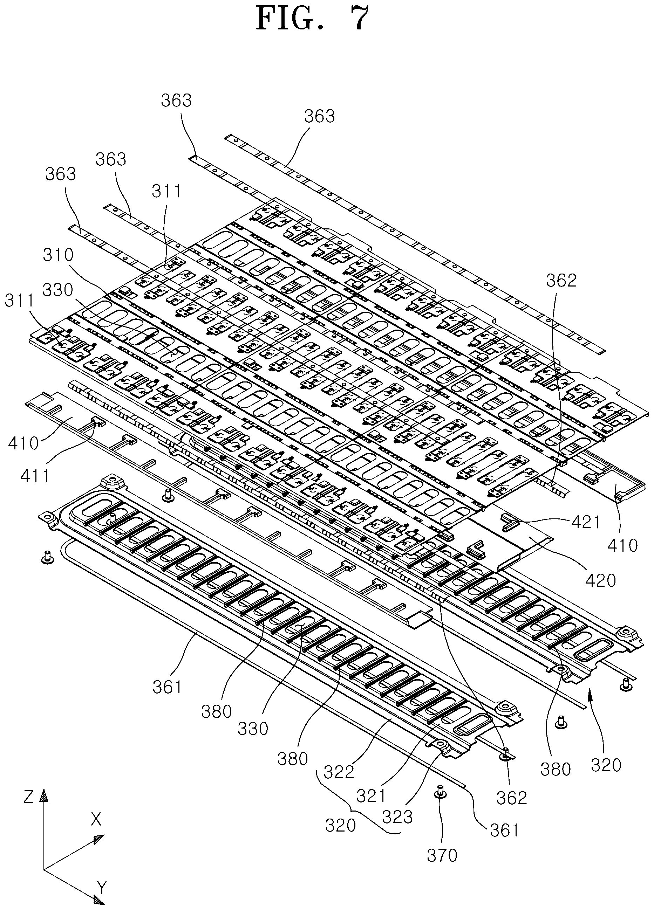

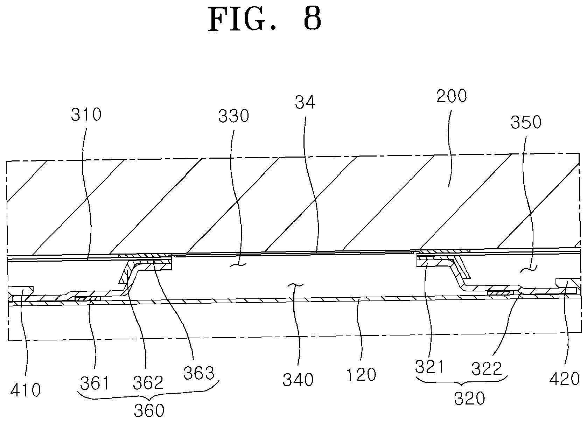

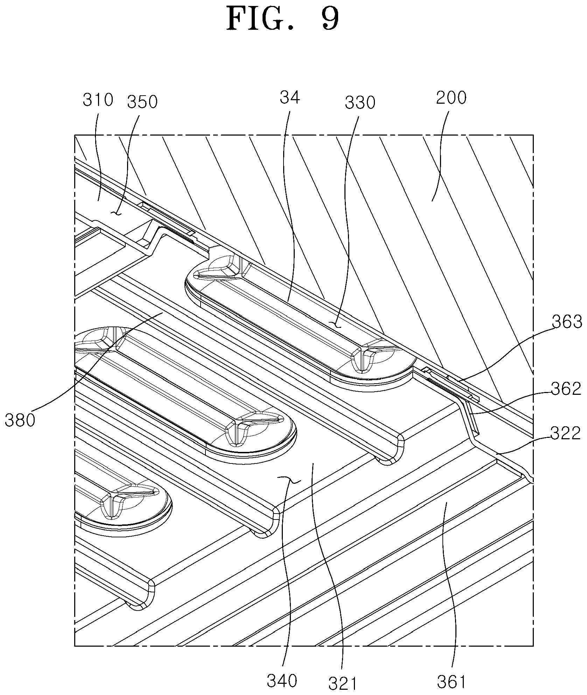

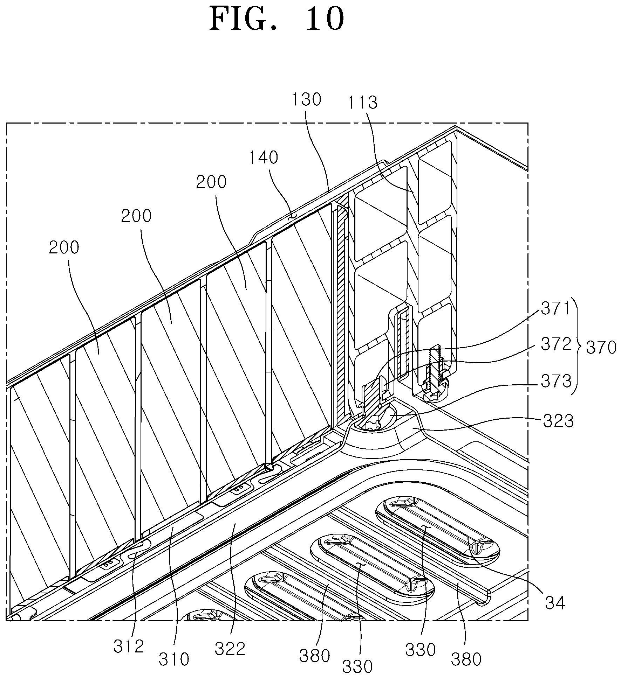

FIG. 7 is an exploded perspective view schematically illustrating a configuration of the guide member according to an embodiment of the present disclosure, FIG. 8 is a cross-sectional view schematically illustrating a configuration of the guide member according to an embodiment of the present disclosure, and FIGS. 9 and 10 are cross-sectional perspective views schematically illustrating a configuration of the guide member according to an embodiment of the present disclosure.

Referring to FIGS. 1 to 10, the guide member 300 may include a bus bar holder 310, a vent bracket 320, a transfer hole 330, a first chamber 340, and a second chamber 350.

The bus bar holder 310 may be disposed between the first cover 120 and the first surface 201 of the battery cell 200. The bus bar holder 310 is formed to have substantially the shape of a plate, and may be seated on the first surface 201 of the battery cell 200. The bus bar holder 310 may be formed of an electrically insulating material.

A plurality of bus bar holders 310 may be provided. The plurality of bus bar holders 310 may be individually disposed in the accommodation spaces of the housing 100 divided by the main body 111, the first partition wall 112, and the second partition wall 113. An area of the bus bar holder 310 may be less than an area of each accommodation space, and may be greater than the sum of an area of the first surface 201 of each of the plurality of battery cells 200 disposed in each accommodation space.

The bus bar holder 310 may include a bus bar 311.

The bus bar 311 may be supported by the bus bar holder 310, and electrically connected to the terminal 21 of the battery cell 200. The bus bar 311 may be exemplified by various types of connection members that may be electrically connected to the battery cell 200 to form a charging and discharging path of the battery cell 200. The bus bar 311 may be formed of an electrically conductive material such as nickel, aluminum, copper, or the like. A surface of the bus bar 311 may be fixed to the terminal 21 of the battery cell 200 by welding or the like. Another surface of the bus bar 311 may be disposed to face the first cover 120.

A plurality of bus bars 311 may be provided. The plurality of bus bars 311 may be disposed at positions facing the terminals 21 of the plurality of battery cells 200. The plurality of bus bars 311 may be arranged in a plurality of rows in the first direction and the second direction. The shape and arrangement form of the plurality of bus bars 311 are not limited to the forms shown in FIGS. 3 and 7, and may be variously changed in design, such as according to a serial or parallel connection structure between the plurality of battery cells 200.

A flexible circuit board (not shown) and various sensors (not shown) capable of detecting state information such as temperature, current, and voltage of each battery cell 200 may be additionally installed in the bus bar holder 310.

The vent bracket 320 may be disposed between the first cover 120 and the bus bar holder 310. The vent bracket 320 may support the battery cell 200 and the bus bar holder 310 with respect to the first cover 120. The vent bracket 320 may separate the first cover 120 and the bus bar holder 310 from each other, thereby providing a space, in which the first chamber 340 and the second chamber 350 to be described below may be formed, between the first cover 120 and the bus bar holder 310. A thickness of the vent bracket 320 may be 0.5 mm to 3 mm.

The vent bracket 320 may include a bracket body 321, a first extension portion 322, and a second extension portion 323.

The bracket body 321 may form an appearance of a central portion of the vent bracket 320. The bracket body 321 may be formed to have a cup shape of which the inside is empty and a lower side is open. The bracket body 321 may be disposed between the bus bar holder 310 and the first cover 120. An open side of the bracket body 321, that is, a lower side surface of the bracket body 321 may be disposed to face the first cover 120. An upper side surface of the bracket body 321 may be disposed to face the bus bar holder 310. The upper side surface of the bracket body 321 may be spaced apart from the bus bar holder 310, and alternatively, may be in direct contact with the bus bar holder 310. The upper side surface of the bracket body 321 may be disposed to face the vent 34 of the battery cell 200 with the bus bar holder 310 interposed therebetween.

The bracket body 321 may extend in a longitudinal direction parallel to the first direction. Accordingly, the upper side surface of the bracket body 321 may be disposed to face the vents 34 of the plurality of battery cells 200 arranged in the first direction with the bus bar holder 310 therebetween.

A plurality of bracket bodies 321 may be provided. Each of the bracket bodies 321 may be individually disposed for each different row of the battery cells 200 arranged in the first direction.

The first extension portion 322 may form an appearance of an edge of the bracket body 321. The first extension portion 322 may extend from a lower end portion of the bracket body 321 in a width direction of the bracket body 321, that is, in a direction parallel to the second direction. The first extension portion 322 may be in contact with an upper side surface of the first cover 120. Accordingly, the first extension portion 322 may support the bracket body 321 between the bus bar holder 310 and the first cover 120.

The second extension portion 323 may extend from the first extension portion 322, and may be in contact with the housing body 110. The second extension portion 323 may be formed to convexly protrude upward from the first extension portion 322 toward the bus bar holder 310.

A plurality of second extension portions 323 may be provided. The plurality of second extension portions 323 may be individually disposed for each position facing the second partition wall 113 among a region (e.g., the entire region) of the first extension portion 322. An upper side surface of the second extension portion 323 may be in contact with a lower side surface of the second partition wall 113.

The second extension portion 323 may be formed to have an empty interior as shown in FIG. 10, or alternatively, may be formed to have a filled interior.

The transfer hole 330 may function as a component that provides a path through which emissions discharged from the vent 34 are transferred to the first chamber 340 to be described below. The transfer hole 330 may be formed to have the shape of a hole vertically passing through the bus bar holder 310 and the vent bracket 320, and more specifically the bracket body 321. Both upper and lower end portions of the transfer hole 330 may be respectively connected to the vent 34 of the battery cell 200 and the first chamber 340 to be described below. The transfer hole 330 may be disposed to face the vent 34 of the battery cell 200. A cross-sectional shape of the transfer hole 330 may be changed in design to various shapes such as a circular shape, a polygonal shape, and the like in addition to an elliptical shape shown in FIG. 9.

A plurality of transfer holes 330 may be provided. The plurality of transfer holes 330 may be arranged at intervals (e.g., predetermined intervals) in the longitudinal direction of the bracket body 321, that is, in the first direction. The plurality of transfer holes 330 may be disposed to respectively face the vents 34 formed in different battery cells 200. A gap between the adjacent transfer holes 330 may be the same as a gap between the vents 34 formed in the adjacent battery cells 200.

The first chamber 340 may be disposed inside the vent bracket 320. The first chamber 340 may refer to a space around (e.g., surrounded by) an inner side surface of the vent bracket 320 among an entire space formed between the bus bar holder 310 and the first cover 120. An upper end portion of the first chamber 340 may be connected to the lower end portion of the transfer hole 330 vertically passing through the bus bar holder 310 and the vent bracket 320. A longitudinal direction of the first chamber 340 may be parallel to a longitudinal direction of the vent bracket 320. That is, the first chamber 340 may be formed to have the shape of a flow path whose longitudinal direction extends in the first direction. An end portion of the first chamber 340 in the longitudinal direction may be connected to an external space of the housing 100. Accordingly, in the event of an explosion or thermal runaway of the battery cell 200, emissions discharged from the vent 34 may be discharged to the external space of the housing 100 sequentially through the transfer hole 330 and the first chamber 340. A height of the first chamber 340 may be 12 mm or more and 20 mm or less.

The second chamber 350 may be disposed outside the vent bracket 320. The second chamber 350 may refer to a space excluding the first chamber 340 from the entire space formed between the bus bar holder 310 and the first cover 120. A longitudinal direction of the second chamber 350 may be parallel to the longitudinal direction of the vent bracket 320. That is, the second chamber 350 may be formed to have the shape of a flow path whose longitudinal direction extends in the first direction. The bus bar 311, which is connected to the terminal 21 of the battery cell 200, and the buffer member 400 to be described below may be accommodated in the second chamber 350.

The first chamber 340 and the second chamber 350 may be alternately disposed in the second direction crossing the first direction. That is, a pair of second chambers 350 may be disposed on both , or opposite, sides of one first chamber 340, respectively. Accordingly, in the battery pack according to the present embodiment, a volume ratio of the battery cell 200 can be increased by integrating a venting path into a space for bollard performance evaluation through impact analysis.

The guide member 300 may further include a sealing member 360.

The sealing member 360 may function as a component that seals the first chamber 340 and the transfer hole 330 so that emissions discharged from the vent 34 are prevented from leaking from the first chamber 340 and the transfer hole 330.

The sealing member 360 may include a first sealing member 361, a second sealing member 362, and a third sealing member 363.

The first sealing member 361 may be disposed between the first cover 120 and the first extension portion 322, and may seal between the first cover 120 and the first extension portion 322. The first sealing member 361 may be formed to have substantially the shape of a band, and upper and lower surfaces thereof may be in contact with a lower side surface of the first extension portion 322 and the upper side surface of the first cover 120, respectively. The first sealing member 361 may be a glue or adhesive that is applied between the first cover 120 and the first extension portion 322 in a liquid or gel state and then is cured. Alternatively, the first sealing member 361 may be formed of an elastically deformable material such as rubber, silicone, or the like. Accordingly, the upper and lower surfaces of the first sealing member 361 may be more strongly attached to the first cover 120 and the first extension portion 322 by its own elastic restoring force. A specific shape of the first sealing member 361 is not limited to the shape shown in FIG. 7, and may be changed in design to various forms capable of sealing between the first cover 120 and the first extension portion 322.

The second sealing member 362 may be disposed between the bus bar holder 310 and the bracket body 321, and may seal between the bus bar holder 310 and the bracket body 321. The second sealing member 362 may be formed to have substantially the shape of a band, and upper and lower surfaces thereof may be in contact with a lower side surface of the bus bar holder 310 and the upper side surface of the bracket body 321, respectively. For any one bracket body 321, the second sealing member 362 may be disposed as a pair. The pair of second sealing members 362 may be disposed to face each other with the transfer hole 330 therebetween.

The second sealing member 362 may be a glue or adhesive that is applied between the bus bar holder 310 and the bracket body 321 in a liquid or gel state and then is cured. Alternatively, the second sealing member 362 may be formed of an elastically deformable material such as rubber, silicone, or the like. Accordingly, the upper and lower surfaces of the second sealing member 362 may be more strongly attached to the bus bar holder 310 and the bracket body 321 by its own elastic restoring force. A specific shape of the second sealing member 362 is not limited to the shape shown in FIG. 7, and may be changed in design to various forms capable of sealing between the bus bar holder 310 and the bracket body 321.

The third sealing member 363 may be disposed between the bus bar holder 310 and the first surface 201 of the battery cell 200, and may seal between the bus bar holder 310 and the first surface 201. The third sealing member 363 may be formed to have substantially the shape of a band, and upper and lower surfaces thereof may be in contact with the first surface 201 and an upper side surface of the bus bar holder 310, respectively. For any one bracket body 321, the third sealing member 363 may be disposed as a pair. The pair of third sealing members 363 may be disposed to face each other with the transfer hole 330 therebetween.

The third sealing member 363 may be a glue or adhesive that is applied between the bus bar holder 310 and the first surface 201 of the battery cell 200 in a liquid or gel state and then is cured. Alternatively, the third sealing member 363 may be formed of an elastically deformable material such as rubber, silicone, or the like. Accordingly, the upper and lower surfaces of the third sealing member 363 may be more strongly attached to the bus bar holder 310 and the first surface 201 by its own elastic restoring force. A specific shape of the third sealing member 363 is not limited to the shape shown in FIG. 7, and may be changed in design to various forms capable of sealing between the bus bar holder 310 and the first surface 201.

The guide member 300 may further include a fixing member 370.

The fixing member 370 may be connected to the vent bracket 320, and may prevent the vent bracket 320 from moving between the bus bar holder 310 and the first cover 120. Accordingly, the fixing member 370 may prevent the sealing performance of the sealing member 360 that seals the transfer hole 330 and the first chamber 340 from deteriorating due to the movement of the vent bracket 320.

The fixing member 370 may include a first fixing body 371, a second fixing body 372, and a pressing flange 373.

The first fixing body 371 may be formed to have the shape of a rod vertically passing through the second extension portion 323 in a vertical direction. An upper end portion of the first fixing body 371 may pass through the second extension portion 323, and may be inserted into the housing body 110, and more specifically, into the second partition wall 113. A screw thread may be formed on an outer circumferential surface of the first fixing body 371.

The second fixing body 372 may be coupled to the first fixing body 371, and may prevent the first fixing body 371 from being separated from the second extension portion 323. The second fixing body 372 may be disposed inside the housing body 110, and more specifically, inside the second partition wall 113. The second fixing body 372 may be formed to have the shape of a hollow ring with a screw thread formed on its inner circumferential surface. An inner side surface of the second fixing body 372 may be screw-coupled to an outer side surface of the first fixing body 371. As the second fixing body 372 is completely coupled to the first fixing body 371, a lower side surface of the second fixing body 372 may be in contact with an inner side surface of the second partition wall 113. Accordingly, when the second fixing body 372 is completely coupled to the first fixing body 371, due to a contact force with the second partition wall 113, the first fixing body 371 may be prevented from being separated from the second partition wall 113 and the second extension portion 323

The pressing flange 373 may extend from the first fixing body 371, and press the second extension portion 323 toward the housing body 110 by interlocking with the coupling of the first fixing body 371 and the second fixing body 372. The pressing flange 373 may have the shape of a circular plate extending in a radial direction of the first fixing body 371 from a lower end portion of the first fixing body 371. An upper side surface of the pressing flange 373 may be in contact with an outer side surface of the second extension portion 323 as an upper end portion of the first fixing body 371 is inserted into the second partition wall 113. When the second fixing body 372 is completely coupled to the first fixing body 371, the pressing flange 373 may press the second extension portion 323 toward the housing body 110 by a reaction force generated by the contact between the second fixing body 372 and the second partition wall 113.

The guide member 300 may further include a reinforcing member 380.

The reinforcing member 380 may be provided in the vent bracket 320, and may reinforce the rigidity of the vent bracket 320. That is, the reinforcing member 380 may function as a component that prevents deformation of the vent bracket 320, which may be caused by a pressure of the emissions discharged from the vent 34, by increasing the inherent rigidity of the vent bracket 320.

In an example, the reinforcing member 380 may have the shape of a rib protruding from the upper side surface of the bracket body 321 toward the first chamber 340. The reinforcing member 380 may be so that a longitudinal direction thereof is parallel to the width direction of the bracket body 321, that is, the second direction. A plurality of reinforcing members 380 may be provided. The plurality of reinforcing members 380 may be arranged at intervals (e.g., predetermined intervals) in the longitudinal direction of the bracket body 321, that is, the first direction. In this case, the plurality of transfer holes 330 and the plurality of reinforcing members 380 may be alternately disposed in the longitudinal direction of the bracket body 321, that is, the first direction.

The buffer member 400 may be disposed between the housing 100 and the first surface 201 of the battery cell 200. The buffer member 400 may be disposed to face the terminal 21 of the battery cell 200, and may absorb an impact applied to the terminal 21. That is, the buffer member 400 may function as a component the prevents damage to the battery cell 200, the terminal 21, and the bus bar 311 due to an impact applied from the outside of the housing 100.

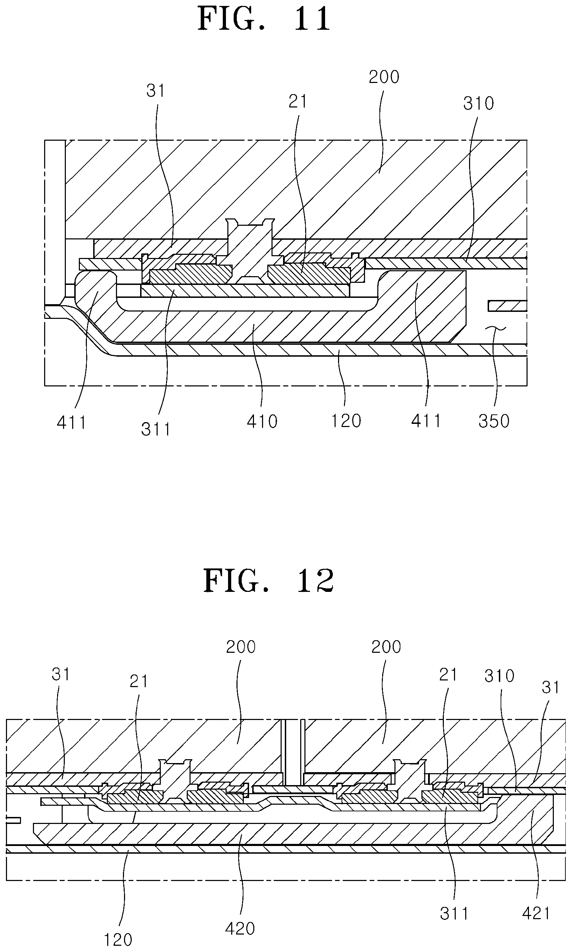

FIGS. 11 and 12 are enlarged cross-sectional views schematically illustrating a configuration of the buffer member according to an embodiment of the present disclosure.

Referring to FIGS. 1 to 12, the buffer member 400 may include a first pad 410 and a second pad 420.

The first pad 410 and the second pad 420 may be disposed between the bus bar holder 310 and the first cover 120, and more specifically, inside the second chamber 350. The first pad 410 and the second pad 420 may be disposed on both, or opposite, sides of the vent bracket 320, respectively, with the vent bracket 320 interposed therebetween.

The first pad 410 may be disposed to face one terminal 21 of the pair of terminals 21 of the battery cell 200. In an example, the first pad 410 may be disposed to face the terminal 21 of the pair of terminals 21 of the battery cell 200, which is adjacent to the first partition wall 112 or the main body 111. The first pad 410 may be disposed to face the terminal 21 with the bus bar 311 interposed therebetween. A lower side surface of the first pad 410 may be in contact with the upper side surface of the first cover 120. An upper side surface of the first pad 410 may be spaced apart from the bus bar 311 and may be in direct contact with the bus bar 311. The first pad 410 may be formed of an elastically deformable material. Accordingly, the first pad 410 may be elastically deformed by an impact applied from the outside and absorb the impact transmitted to the bus bar 311 and the terminal 21.

The first pad 410 may be formed of an insulating material. Accordingly, the first pad 410 may electrically insulate the bus bar 311 and the terminal 21 from the first cover 120, thereby preventing a safety accident caused by a short circuit or the like. In an example, the first pad 410 may include at least one of silicone, rubber, and other synthetic resin materials that are elastically deformable and have insulation properties.

The first pad 410 may include a first protrusion 411. The first protrusion 411 may protrude upward from the upper side surface of the first pad 410, and may be in contact with the lower side surface of the bus bar holder 310. In this case, the first pad 410 may be disposed to entirely surround the bus bar 311 protruding downward from the bus bar holder 310. Accordingly, when an impact is applied from the outside, the first pad 410 may be prevented from being changed in position with respect to the bus bar 311.

The second pad 420 may be disposed to face the remaining one terminal 21 of the pair of terminals 21 of the battery cell 200. In an example, the second pad 420 may be disposed to face the terminal 21, which is adjacent to the battery cell 200 in the second direction, of the pair of terminals 21 of the battery cell 200. The second pad 420 may be disposed to face the terminal 21 with the bus bar 311 interposed therebetween. A lower side surface of the second pad 420 may be in contact with the upper side surface of the first cover 120. An upper side surface of the second pad 420 may be spaced apart from the bus bar 311 and may be in direct contact with the bus bar 311. The second pad 420 may be formed of an elastically deformable material such as rubber or silicone. Accordingly, the second pad 420 may be elastically deformed by an impact applied from the outside and absorb the impact transmitted to the bus bar 311 and the terminal 21.

The second pad 420 may be formed of an insulating material. Accordingly, the second pad 420 may electrically insulate the bus bar 311 and the terminal 21 from the first cover 120, thereby preventing a safety accident caused by a short circuit or the like. In an example, the second pad 420 may include at least one of silicone, rubber, and other synthetic resin materials that are elastically deformable and have insulation properties.

A length of the second pad 420 parallel to the second direction may be greater than a length of the first pad 410 parallel to the second direction. Accordingly, the second pad 420 may be formed in each of the pair of battery cells 200 adjacent to each other in the second direction, and disposed to face both the pair of terminals 21 disposed adjacent to each other.

The second pad 420 may include a second protrusion 421. The second protrusion 421 may protrude upward from the upper side surface of the second pad 420, and may be in contact with the lower side surface of the bus bar holder 310. In this case, the second pad 420 may be disposed to entirely surround the bus bar 311 protruding downward from the bus bar holder 310. Accordingly, when an impact is applied from the outside, the second pad 420 may be prevented from being changed in position with respect to the bus bar 311.

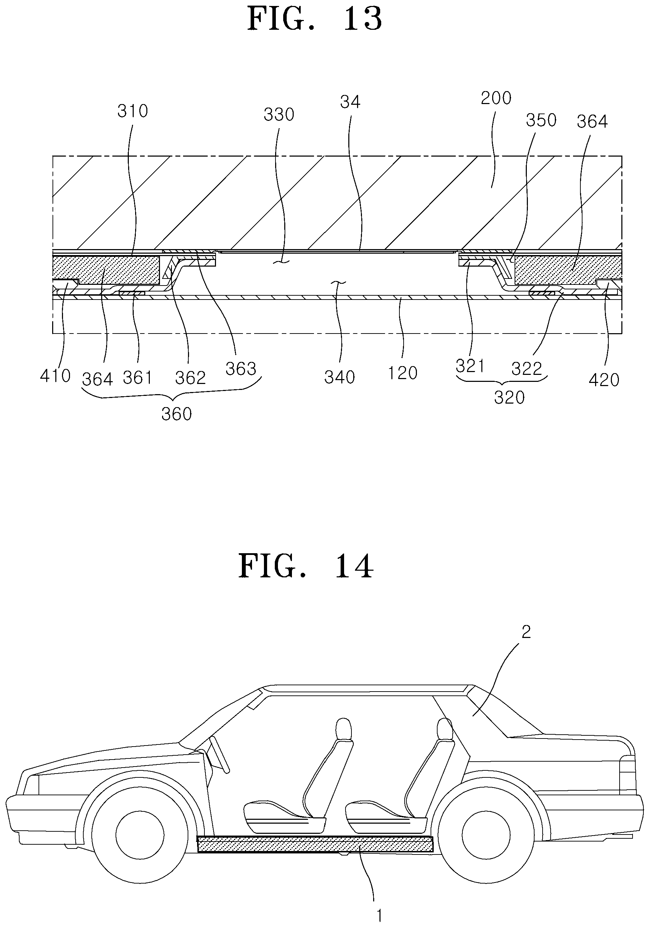

FIG. 13 is a cross-sectional view schematically illustrating a configuration of a fourth sealing member according to an embodiment of the present disclosure.

Referring to FIG. 13, the sealing member 360 may further include a fourth sealing member 364.

The fourth sealing member 364 may be disposed inside the second chamber 350. The fourth sealing member 364 may function as a component that blocks the diffusion of the emissions, which are discharged from the first chamber 340 or the transfer hole 330 to the second chamber 350, in the second chamber 350. Accordingly, the fourth sealing member 364 may preliminarily secure sealing performance with respect to the first chamber 340 or the transfer hole 330, even when the first sealing member 361, the second sealing member 362, and the third sealing member 363 are damaged or deviated from their normal positions due to an external impact, pressure rise due to thermal runaway of the battery cell 200, or the like.

The fourth sealing member 364 may include a material having excellent sealing performance, and having insulation properties and heat resistance. In an example, the fourth sealing member 364 may include at least one material of silicone, rubber, epoxy, polyurethane, and aerogel.

The fourth sealing member 364 may be injected into the second chamber 350 in a liquid or gel state and then cured. Alternatively, the fourth sealing member 364 may be fabricated in a solid state and then inserted into the second chamber 350. The fourth sealing member 364 may be fixed to surfaces of the first cover 120, the vent bracket 320, the first pad 410, and the second pad 420 facing an inner space of the second chamber 350. The fourth sealing member 364 may be fixed to the surfaces of the first cover 120, the vent bracket 320, the first pad 410, and the second pad 420 by its own adhesive force, or may be pressed onto the surfaces of the first cover 120, the vent bracket 320, the first pad 410, and the second pad 420. Accordingly, the fourth sealing member 364 may seal the inner space of the second chamber 350 without gaps.

Hereinafter, a vehicle according to an embodiment of the present disclosure will be described.

FIG. 14 is a view schematically illustrating a configuration of a vehicle according to an embodiment of the present disclosure.

Referring to FIGS. 1 to 14, the vehicle may include a battery pack 1 and a vehicle body 2.

The battery pack 1 is configured in the same manner as the battery pack 1 described with reference to FIGS. 1 to 13, and thus a repeated description thereof will be omitted.

The vehicle body 2 forms a frame of the vehicle and supports the battery pack 1. The vehicle body 2 may be exemplified as a frame body, a monocoque body, a skateboard platform, or the like, which is commonly applied to a vehicle. A plurality of wheels rotated by receiving a driving force from a motor, an engine, or the like may be connected to the vehicle body 2.

The battery pack 1 may be disposed below the vehicle body 2. For example, the battery pack 1 may be coupled to a floor panel or the like of the vehicle body 2.

In this case, the first cover 120 of the housing 100 may be disposed to face downward, and the first surface 201 of the battery cell 200 may also be disposed to face downward. Accordingly, in the vehicle according to the present embodiment, by integrating a venting path into a lower space of the battery pack 1, which may be used for bollard performance evaluation through impact analysis, a volume ratio of the battery cell 200 can be increased and energy efficiency can be improved.

The above-described vehicle may be variously changed in design within a range of a moving means, to which the battery pack 1 is mounted, including an electric vehicle, a hybrid vehicle, an electric motorcycle, and other electric mobility.

Although the present disclosure has been described with reference to some example embodiments and drawings, the present disclosure is not limited thereto and may be variously implemented by those of ordinary skill in the art to which the present disclosure pertains, within the technical idea of the present disclosure as defined by the appended claims.

## Claims

1. A battery pack (1) comprising:
a housing (100);
a plurality of battery cells (200), each comprising a first surface (201) and a second surface (202) opposite to each other, and a vent (34) and a terminal (21) formed on the first surface (201), and disposed inside the housing (100);
a guide member (300) disposed between the housing (100) and the first surface (201) and configured to guide a flow of emissions discharged from the vent (34); and
a buffer member (400) disposed between the housing (100) and the first surface (201) and configured to absorb an impact applied to the terminal (21).

2. The battery pack (1) as claimed in claim 1, wherein the housing (100) comprises:
a housing body (110);
a first cover (120) coupled to the housing body (110) and disposed to face the first surface (201); and
a second cover (130) coupled to the housing body (110) and disposed to face the second surface (202).

3. The battery pack (1) as claimed in claim 2, wherein the first surface (201) is disposed to face downward, and
the first cover (120) is disposed below the housing body (110).

4. The battery pack (1) as claimed in claim 2 or 3, wherein the guide member (300) comprises:
a bus bar holder (310) disposed between the first cover (120) and the first surface (201) and including a bus bar (311) connected to the terminal (21);
a vent bracket (320) disposed between the first cover (120) and the bus bar holder (310);
a plurality of transfer holes (330) formed to pass through the bus bar holder (310) and the vent bracket (320);
a first chamber (340) disposed inside the vent bracket (320) and connected to the transfer hole (330); and
a second chamber (350) disposed outside the vent bracket (320) and configured to accommodate the buffer member (400).

5. The battery pack (1) as claimed in claim 4, wherein the plurality of battery cells (200) are arranged in a first direction, and
the first chamber (340) and the second chamber (350) extend in the first direction.

6. The battery pack (1) as claimed in claim 4 or 5, wherein the vent bracket (320) comprises:
a bracket body (321) disposed to surround the first chamber (340);
a first extension portion (322) extending from the bracket body (321) and in contact with the first cover (120); and
a second extension portion (323) extending from the first extension portion (322) and in contact with the housing body (110).

7. The battery pack (1) as claimed in claim 6, wherein the guide member (300) further comprises a sealing member (360) configured to seal the first chamber (340) and the transfer hole (330).

8. The battery module as claimed in claim 7, wherein the sealing member (360) comprises:
a first sealing member (361) disposed between the first cover (120) and the first extension portion (322);
a second sealing member (362) disposed between the bus bar holder (310) and the bracket body (321); and
a third sealing member (363) disposed between the bus bar holder (310) and the first surface (201).

9. The battery pack (1) as claimed in claim 7 or 8, wherein the sealing member (360) further comprises a fourth sealing member (364) disposed inside the second chamber (350).

10. The battery pack (1) as claimed in any one of claims 6 to 9, wherein the guide member (300) further comprises a fixing member (370) connected to the vent bracket (320) and configured to prevent movement of the vent bracket (320).

11. The battery pack (1) as claimed in claim 10, wherein the fixing member (370) comprises:
a first fixing body (371) passing through the second extension portion (323) and inserted into the housing body (110);
a second fixing body (372) disposed inside the housing body (110) and coupled to the first fixing body (371); and
a pressing flange (373) extending from the first fixing body (371) and configured to press the second extension portion (323) toward the housing body (110).

12. The battery pack (1) as claimed in any one of claims 4 to 11, wherein the guide member (300) further comprises a plurality of reinforcing members (380) configured to reinforce rigidity of the vent bracket (320).

13. The battery pack (1) as claimed in any one of claims 4 to 12, wherein the terminal (21) is provided as a pair, and
the buffer member (400) comprises:
a first pad (410) disposed on one side of the vent bracket (320) and facing one terminal (21) of the pair of terminals (21); and
a second pad (420) disposed on the other side of the vent bracket (320) and facing the other terminal (21) of the pair of terminals (21).

14. A vehicle comprising:
a vehicle body (2); and
a battery pack (1) as claimed in any one of the preceding claims and coupled to the vehicle body (2).

15. The vehicle as claimed in claim 14, wherein the battery pack (1) is disposed below the vehicle body (2), and
the first surface (201) is disposed to face downward.
